# EUROPEAN PATENT APPLICATION

(11) **EP 4 459 526 A1**
(43) Date of publication of application: **06.11.2024**
(21) Application number: 22928249.6
(22) Date of filing: 25.10.2022
(51) Int. Cl.: G06Q 10/06

(54) **POWER DEMAND RESPONSE ADJUSTMENT METHOD AND APPARATUS, AND COMPUTER DEVICE AND STORAGE MEDIUM**

(30) Priority: 25.02.2022 CN 202210181857
(71) Applicant: Gree Electric Appliances, Inc. of Zhuhai, Zhuhai, Guangdong 519070 (CN)
(72) Inventor: REN, Peng, Zhuhai, Guangdong 519070 (CN); WEN, Wu, Zhuhai, Guangdong 519070 (CN); NIE, Jingen, Zhuhai, Guangdong 519070 (CN); LUO, Maohe, Zhuhai, Guangdong 519070 (CN); LUO, Shiya, Zhuhai, Guangdong 519070 (CN)
(74) Representative: Zacco GmbH
(86) International application number: PCT/CN2022/127176
(87) International publication number: WO 2023/159987

(57) **Abstract**

The present disclosure relates to a method for adjusting electric power demand response and apparatus, a computer device, a storage medium and a computer program product. The method is applied to a demand response device, and the demand response device is disposed between a wiring terminal of an electric device and a power supply line wiring. The method includes: acquiring a real-time operation parameter of the electric device; analyzing the real-time operation parameter to obtain a real-time response power amount of the electric device; sending the real-time response power amount to a power supply end, and receiving a first demand response adjustment instruction, which is returned by the power supply end when determining that an adjustment demand is satisfied by comparing a total adjustable response power amount of a power consumption unit with a preset response power amount, and the total adjustable response power amount of the power consumption unit is determined according to the real-time response power amount; and performing demand response adjustment on the electric device on the basis of the first demand response adjustment instruction.

## Description

### Cross-Reference to Related Application

The present disclosure is based on and claims the priority of Application Number CN 202210181857.2, filed on February 25, 2022, and the entire contents of which are herein incorporated by reference.

### Technical Field

The present disclosure relates to the technical field of regulation and control of electric energy, and in particular to a method for adjusting electric power demand response and apparatus, a computer device, a storage medium and a computer program product.

### Background

With the deepening of electric power marketization reforms and the further promotion of the concept of an energy Internet, a demand-side response becomes an effective method for coping with unbalanced electric power supply and demand in the field of intelligent regulation and control of electric energy.

The demand-side response means that when the reliability of a power grid system is threatened or an electric power market price is increased, an electric power user changes an inherent habitual power consumption mode after receiving a direct compensation notification for induced load reduction sent by a power supply party or an electricity price rise signal, so as to reduce or transfer an electrical load in a certain time period to respond to electric power supply, thereby ensuring the stability of a power grid and suppressing a short-term behavior of a rise in the electricity price.

### Summary

In a first aspect, the present disclosure provides a method for adjusting electric power demand response, which is applied to a demand response device, wherein the demand response device is disposed between a wiring terminal of an electric device and a power supply line wiring, and the method includes:
acquiring a real-time operation parameter of the electric device;
analyzing the real-time operation parameter to obtain a real-time response power amount of the electric device;
sending the real-time response power amount to a power supply end, and receiving a first demand response adjustment instruction, which is returned by the power supply end when determining that an adjustment demand is satisfied by comparing a total adjustable response power amount of a power consumption unit with a preset response power amount, wherein the total adjustable response power amount of the power consumption unit is determined according to the real-time response power amount; and
performing demand response adjustment on the electric device on the basis of the first demand response adjustment instruction.
In some embodiments, the first demand response adjustment instruction includes the preset response power amount; and
performing the demand response adjustment on the electric device on the basis of the first demand response adjustment instruction includes:
   performing the demand response adjustment on the electric device according to the preset response power amount and the type of the electric device.

In some embodiments, performing the demand response adjustment on the electric device according to the preset response power amount and the type of the electric device includes:
in a case that the electric device is an adjustable device, performing the demand response adjustment on the electric device according to the preset response power amount.

In some embodiments, the method further includes:
in a case that a real-time response power amount of the adjustable device reaches a preset adjustment threshold value, stopping performing the demand response adjustment on the electric device;
generating a demand response adjustment result according to an adjusted amount of the adjustable device; and
sending the demand response adjustment result to the power supply end.

In some embodiments, performing the demand response adjustment on the electric device according to the preset response power amount and the type of the electric device further includes:
receiving a second demand response adjustment instruction, which is fed back by the power supply end after performing the demand response adjustment on all adjustable devices within the range of the power consumption unit; and
in a case that the electric device is a non-adjustable device, in response to the second demand response adjustment instruction, performing demand response adjustment on the non-adjustable device according to an on-off state of the non-adjustable device.

In some embodiments, the method further includes:
sending a real-time adjustment response power amount of the electric device to the power supply end;
receiving a response adjustment completion instruction generated by the power supply end when a total real-time adjustment response power amount reaches the preset response power amount, wherein the total real-time adjustment response power amount is generated according to the real-time adjustment response power amount of the electric device; and
stopping performing the demand response adjustment on the electric device according to the response adjustment completion instruction.
In some embodiments, the first demand response adjustment instruction includes an adjustment response power amount of the electric device; and
performing the demand response adjustment on the electric device on the basis of the first demand response adjustment instruction includes:
   performing the demand response adjustment on the electric device according to the adjustment response power amount.

In a second aspect, the present disclosure further provides a method for adjusting electric power demand response, applied to a power supply end, wherein the method includes:
receiving a real-time response power amount of each electric device, which is sent by each demand response device, wherein the real-time response power amount is obtained via analysis according to a real-time operation parameter of each electric device;
determining a total adjustable response power amount of a power consumption unit according to each real-time response power amount;
comparing the total adjustable response power amount with a preset response power amount;
when it is determined, according to a comparison result, that the power consumption unit satisfies an adjustment requirement, generating a first demand response adjustment instruction; and
sending the first demand response adjustment instruction to each demand response device, wherein the first demand response adjustment instruction instructs each demand response device to perform demand response adjustment on each electric device.

In some embodiments, comparing the total adjustable response power amount with the preset response power amount includes:
in a case that the total adjustable response power amount is greater than the preset response power amount, determining that the electric device satisfies the adjustment requirement.

In some embodiments, the method further includes:
receiving demand response adjustment results returned by demand response devices corresponding to all adjustable devices within range of the power consumption unit; and
generating a second demand response adjustment instruction according to the demand response adjustment results and the preset response power amount, and sending the second demand response adjustment instruction to each demand response device.

In some embodiments, the method further includes:
receiving a real-time adjustment response power amount returned by each demand response device;
calculating a total real-time adjustment response power amount of the power consumption unit according to the real-time adjustment response power amount; and
comparing the total real-time adjustment response power amount with the preset response power amount, when the total real-time adjustment response power amount reaches the preset response power amount, generating a response adjustment completion instruction, and sending the response adjustment completion instruction to each demand response adjustment device, wherein the response adjustment completion instruction instructs each demand response adjustment device to stop performing the demand response adjustment on the electric device.

In some embodiments, the first demand response adjustment instruction includes an adjustment response power amount of the electric device; and
when it is determined, according to the comparison result, that the power consumption unit satisfies the adjustment requirement, generating the first demand response adjustment instruction, includes:
when it is determined, according to the comparison result, that the power consumption unit satisfies the adjustment requirement, according to the preset response power amount, and the real-time response power amount and at least one performance parameter, which correspond to each electric device, calculating the adjustment response power amount corresponding to each electric device; and
generating the first demand response adjustment instruction which is corresponding to each adjustment response power amount according to each adjustment response power amount; and
sending each first demand response adjustment instruction to each corresponding demand response device, wherein each first demand response adjustment instruction instructs each demand response device to perform demand response adjustment on each electric device.

In a third aspect, the present disclosure further provides an apparatus for adjusting electric power demand response, including:
a real-time operation parameter acquisition component, configured to acquire a real-time operation parameter of an electric device;
a real-time operation parameter analysis component, configured to analyze the real-time operation parameter to obtain a real-time response power amount of the electric device;
a real-time response power amount sending component, configured to send the real-time response power amount to a power supply end, and receive a first demand response adjustment instruction, which is returned by the power supply end when determining that an adjustment demand is satisfied by comparing a total adjustable response power amount of a power consumption unit with a preset response power amount, wherein the total adjustable response power amount of the power consumption unit is determined according to the real-time response power amount; and
a demand response adjustment component, configured to perform demand response adjustment on the electric device on the basis of the first demand response adjustment instruction.

In a fourth aspect, the present disclosure further provides a computer device, including a memory and a processor, wherein the memory stores a computer program, and the processor implements, when executing the computer program, the steps of the above method for adjusting electric power demand response.

In a fifth aspect, the present disclosure further provides a non-volatile computer-readable storage medium, storing a computer program thereon, wherein the computer program implements, when executed by a processor, the steps of the above method for adjusting electric power demand response.

In a sixth aspect, the present disclosure further provides a computer program product, including a computer program, wherein the computer program implements, when executed by a processor, the steps of the above method for adjusting electric power demand response.

In a seventh aspect, the present disclosure further provides a computer program, including an instruction, wherein the instruction causes, when executed by a processor, the processor to execute the steps of the above method for adjusting electric power demand response.

### Brief Description of the Drawings

Fig. 1 is a diagram of an application environment of a method for adjusting electric power demand response in some embodiments;
Fig. 2 is a structural block diagram of a demand response device in some embodiments;
Fig. 3 is a schematic flowchart of a method for adjusting electric power demand response in some embodiments;
Fig. 4 is a schematic flowchart of a method for adjusting electric power demand response in some other embodiments;
Fig. 5 is a schematic flowchart of a method for adjusting electric power demand response in some other embodiments;
Fig. 6 is a schematic flowchart of steps of generating a first demand response adjustment instruction when it is determined, according to a comparison result, that a power consumption unit satisfies an adjustment requirement in some embodiments;
Fig. 7 is a structural block diagram of an apparatus for adjusting electric power demand response in some embodiments; and
Fig. 8 is an internal structural diagram of a computer device in some embodiments.

### Detailed Description of the Embodiments

In order to make the objectives, technical solutions and advantages of the present disclosure clearer, the present disclosure will be further described in detail below in combination with the drawings and embodiments. It should be understood that the specific embodiments described herein are merely used for explaining the present disclosure, and are not intended to limit the present disclosure.

As described above, most of demand-side response control methods can only perform macroscopic regulation and control, but cannot distinguish electric devices of a user let alone accurately responding to and regulating and controlling the electric devices according to actual conditions of the electric devices.

Based on this, in view of the above technical problems, it is necessary to provide a method for adjusting electric power demand response and apparatus, a computer device, a storage medium and a computer program product, which can accurately perform demand response regulation and control on an electric device.

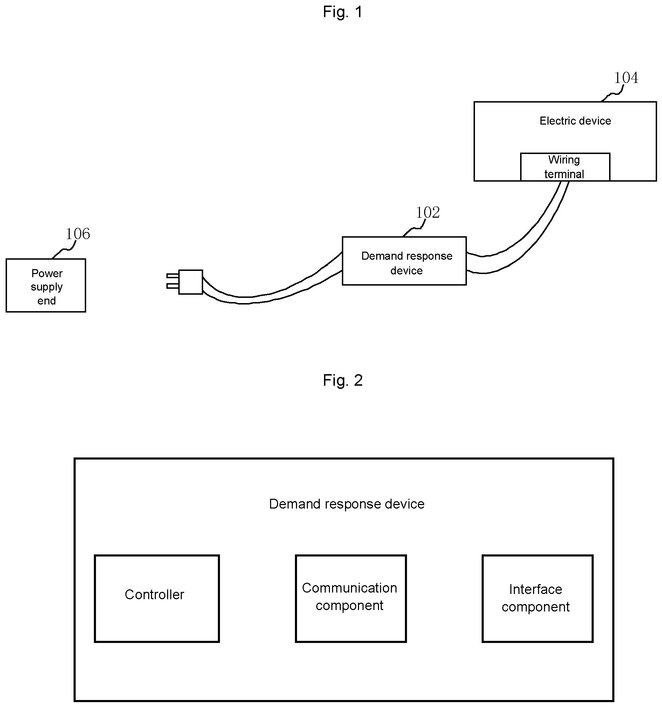

In some embodiments, the method for adjusting electric power demand response provided in some embodiments of the present disclosure is applied to an application environment shown in Fig. 1. A demand response device 102 is disposed between a wiring terminal of an electric device 104 and a power supply line, and the demand response device 102 communicates with the electric device 104 and a power supply end 106 via an internal communication component, respectively. For example, a data storage system stores data that the demand response device 102 needs to process. The data storage system is integrated on the demand response device 102. In some embodiments, the demand response device 102 acquires a real-time operation parameter of the electric device 104; analyzes the real-time operation parameter to obtain a real-time response power amount of the electric device 104; and sends the real-time response power amount to the power supply end 106, and receives a first demand response adjustment instruction, which is returned by the power supply end 106 when determining that an adjustment demand is satisfied by comparing a total adjustable response power amount of a power consumption unit with a preset response power amount, and the total adjustable response power amount of the power consumption unit is determined according to the real-time response power amount; and the demand response device 102 performs demand response adjustment on the electric device 104 on the basis of the first demand response adjustment instruction.

The electric device 104 is any electric appliance device, in some embodiments the electric device is an air conditioner, a refrigerator, a washing machine, or the like. The power supply end 106 is an electric meter.

In some embodiments, it can be understood that the demand response device 102 is built in the wiring terminal of the electric device according to actual demands and is fused with the wiring terminal as a whole, and another interface is connected with a power supply line interface. In some embodiments, the demand response device 102 is externally disposed between a power socket and the wiring terminal of the electric device, one interface is connected with the wiring terminal of the electric device 104, and the other interface is connected with the power supply line interface. This is not limited in the present disclosure.

In some embodiments, as shown in Fig. 2, the demand response device 102 is internally provided with a controller, a communication component and an interface component.

The controller is configured to monitor an operation parameter of the electric device 104 in real time, analyze the operation parameter, and control, according to a demand response requirement of the power supply end 106, the electric device 104 to perform demand response adjustment. In some embodiments, it can be understood that the controller is any chip or electronic device having a micro-processing function, such as a central processing unit, a single-chip microcomputer, or the like.

The communication component is configured to implement information interaction among the controller, the electric device 104 and the power supply end 106. In some embodiments, the controller monitors the operation parameter of the electric device 104 via the communication component, receives the demand response requirement issued by the power supply end 106, replies state information of the electric device 104 to the power supply end 106, and the like. It can be understood that the communication component can satisfy various communication demands, and the communication mode, such as wireless communication, carrier communication, and the like, between the electric device 104 and the power supply end 106 is not limited.

The interface component is configured to set a corresponding communication mode and a configuration protocol according to demands of the electric device 104 and the power supply end 106, so that the demand response device can be compatible with various electric devices using different interface modes.

The method for adjusting electric power demand response and apparatus, the computer device, the storage medium and the computer program product are applied to the demand response device disposed between the wiring terminal of the electric device and the power supply line wiring, so as to ensure that the demand response device is in one-to-one correspondence with the electric device; when it is necessary to perform demand response adjustment on the electric device, the demand response device performs analysis according to the real-time operation parameter of the electric device to obtain the real-time response power amount of the electric device, so that the actual operation condition of the electric device can be reflected; the power supply end performs comparison on the basis of the total adjustable response power amount of the power consumption unit and the preset response power amount, and returns the first demand response adjustment instruction when it is determined that the comparison result satisfies the adjustment requirement; and the demand response device performs demand response adjustment on the electric device on the basis of the first demand response adjustment instruction. Since the total adjustable response power amount of the power consumption unit is determined according to the real-time response power amount of the electric device, when demand response adjustment is performed on the electric device, the demand response adjustment is performed on the electric device according to the actual conditions of the electric device, so that the entire demand response adjustment process is more accurate and rapid.

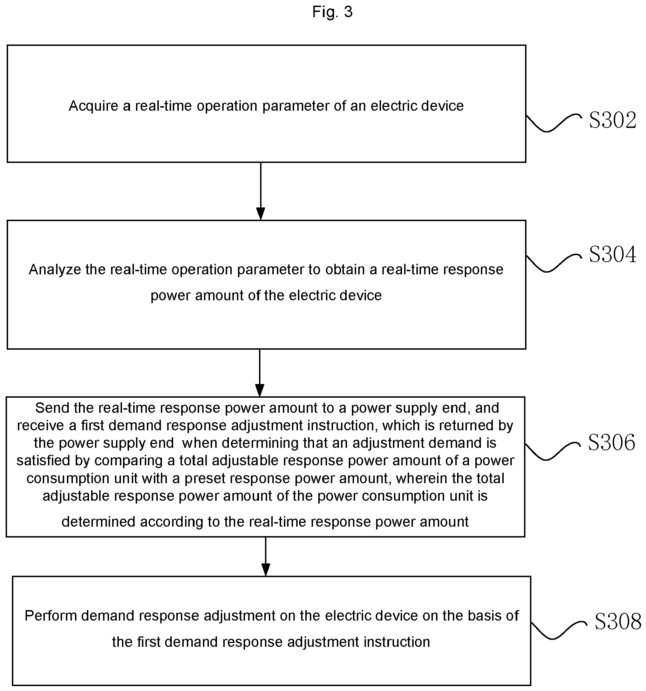

In some embodiments, as shown in Fig. 3, a method for adjusting electric power demand response is provided, it is taken as an example for description that the method is applied to the demand response device 102 in Fig. 1, and the method includes the following steps:
Step 302: acquiring a real-time operation parameter of an electric device.

The electric device is a device that consumes electric power, and taking a household as an example, the electric device is a device used in the household, such as an air conditioner, a television, a washing machine, etc.

The real-time operation parameter of the electric device refers to a parameter, which is generated by the electric device in real time during an operation process and is capable of reflecting an operation state of the electric device. For example, when the electric device is an air conditioner, the real-time operation parameter is an operating voltage, an operating current, an operating power, an operating temperature, an electric quantity monitoring value and the like of the air conditioner.

In some embodiments, the demand response device acquires, by means of a communication component, the real-time operation parameter that is capable of reflecting the operation state of the electric device.

Step 304: analyzing the real-time operation parameter to obtain a real-time response power amount of the electric device.

The power is a value used for reflecting the power consumption of the electric device, and the real-time response power amount is a power amount responded by the electric device when the electric device is in the current operation state, and can be used for reflecting the power consumption of the electric device in the current operation state.

In some embodiments, the real-time operation parameter is analyzed by using a response power amount calculation formula to obtain the real-time response power amount of the electric device. For example, the real-time operation parameter is processed and then is compared with historical processing data of the real-time operation parameter to obtain the real-time response power amount of the electric device. This is not limited in the present disclosure.

In some embodiments, the demand response device analyzes the acquired real-time operation parameter of the electric device to obtain the real-time response power amount of the electric device.

In some embodiments, analyzing the real-time operation parameter to obtain the real-time response power amount of the electric device includes: generating a current operation trend curve of the electric device according to the real-time operation parameter, and comparing the current operation trend curve with a historical operation trend curve to obtain the real-time response power amount of the electric device.

The historical operation trend curve is a trend curve, which is pre-stored in a database and reflects a historical operation state and a response power amount of the electric device. In some embodiments, the current operation trend curve generated according to the real-time operation parameter is compared with the historical operation trend curve, so that the real-time response power amount of the electric device can be obtained.

Step 306: sending the real-time response power amount to a power supply end, and receiving a first demand response adjustment instruction, which is returned by the power supply end when determining that an adjustment demand is satisfied by comparing a total adjustable response power amount of a power consumption unit with a preset response power amount, wherein the total adjustable response power amount of the power consumption unit is determined according to the real-time response power amount.

The preset response power amount refers to a response power amount value that the power consumption unit corresponding to the power supply end needs to reach within a preset time period. It can be understood that the preset response power amount is set and issued by a power supply center according to a historical response power amount of the power consumption unit corresponding to the power supply end.

In some embodiments, the total adjustable response power amount is a response power amount to which all electric devices of the power consumption unit corresponding to the power supply end is adjusted at the current moment. In some embodiments, the total adjustable response power amount of the power consumption unit is determined according to the real-time response power amounts of all the electric devices of the power consumption unit.

In some embodiments, the demand response device sends the calculated real-time response power amount to the power supply end, and receives the first demand response adjustment instruction returned by the power supply end. The first demand response adjustment instruction is returned by the power supply end when comparing the total adjustable response power amount of the power consumption unit with the preset response power amount and determining that the adjustment demand is satisfied, and the total adjustable response power amount of the power consumption unit is determined according to the real-time response power amounts of the electric devices.

Step 308: performing demand response adjustment on the electric device on the basis of the first demand response adjustment instruction.

In some embodiments, the demand response device performs demand response adjustment on the electric device on the basis of the first demand response adjustment instruction sent by the power supply end.

In the above method for adjusting electric power demand response, the demand response device is in one-to-one correspondence with the electric device, and when it is necessary to perform demand response adjustment on the electric device, the demand response device performs analysis according to the real-time operation parameter of the electric device to obtain the real-time response power amount of the electric device, so that the actual operation condition of the electric device can be reflected; the power supply end performs comparison on the basis of the total adjustable response power amount of the power consumption unit and the preset response power amount, and returns the first demand response adjustment instruction when it is determined that the comparison result satisfies the adjustment requirement; and the demand response device performs demand response adjustment on the electric device on the basis of the first demand response adjustment instruction. Since the total adjustable response power amount of the power consumption unit is determined according to the real-time response power amount of the electric device, when demand response adjustment is performed on the electric device, the demand response adjustment is performed on the electric device according to the actual conditions of the electric device, so that the entire demand response adjustment process is more accurate and rapid.

In some embodiments, the first demand response adjustment instruction includes the preset response power amount; and performing demand response adjustment on the electric device on the basis of the first demand response adjustment instruction includes: performing demand response adjustment on the electric device according to the preset response power amount and the type of the electric device.

In some embodiments, the type of the electric device is obtained by performing classification according to the magnitude of the response power of the electric device, and is divided into a high-power type and a low-power type; or the type of the electric device is classified according to whether the response power of the electric device can be adjusted, and is divided into an adjustable electric device and a non-adjustable electric device.

In some embodiments, the first demand response adjustment instruction returned by the power supply end includes the preset response power amount, and upon receiving the first demand response adjustment instruction, the demand response device performs demand response adjustment on the electric device according to the preset response power amount in the first demand response adjustment instruction and the type of the electric device corresponding to the demand response device itself. By means of performing demand response adjustment on the electric device according to the type of the electric device and the preset response power amount, corresponding demand response adjustment is performed according to the type of the electric device in view of the actual conditions of the electric device, so that the adjustment process is more accurate.

In some embodiments, performing demand response adjustment on the electric device according to the preset response power amount and the type of the electric device includes: in a case that the electric device is an adjustable device, performing demand response adjustment on the electric device according to the preset response power amount.

In a case that a rated power value of the electric device during operation is a range value, the electric device is determined as an adjustable electric device.

In some embodiments, when the demand response device determines, as an adjustable device, the electric device corresponding thereto, it is proved that demand response adjustment is performed on the electric device according to the preset response power amount at this time. Due to the adjustability of the adjustable device, no excessively large influence is generated on the usage of the user. The demand response device performs demand response adjustment on the electric device according to the preset response power amount.

In the method in the present embodiment, when demand response adjustment is performed on the electric device, the electric device is determined as an adjustable device first and then is adjusted, therefore it can be ensured that no excessively large influence is generated on the usage of the user during an adjustment process, the power consumption experience of the user is improved, and the entire demand response adjustment process is more intelligent.

In some embodiments, the demand response adjustment method further includes: in a case that the real-time response power amount of the adjustable device reaches a preset adjustment threshold value, stopping performing demand response adjustment on the electric device; generating a demand response adjustment result according to an adjusted amount of the adjustable device; and sending the demand response adjustment result to the power supply end.

The preset adjustment threshold value is a limit value to which the adjustable device can be adjusted when demand response adjustment is performed on the adjustable device. It can be understood that the preset adjustment threshold value is generated according to a rated power range value of the adjustable electric device. In some embodiments, during the usage of the adjustable electric device, the adjustable electric device must be maintained within the rate power for running, and in a case that the adjustable electric device exceeds an upper limit value of the rated power, the electric device will be damaged at a large probability; and in a case that the electric device is lower than a lower limit value of the rated power, the electric device cannot operate normally. Since the rated power value of the adjustable electric device is generally a range value, for example, the preset adjustment threshold value includes two values, that is, an upper limit value and a lower limit value, and when the adjustable electric device is adjusted, the real-time response power amount of the adjustable electric device cannot exceed an adjustment interval formed by the upper limit value and the lower limit value of the preset adjustment threshold value.

In some embodiments, the preset adjustment threshold value is set according to the rated power value of the adjustable electric device, the preset adjustment threshold value is pre-stored in a data storage library of the demand response device, and when demand response adjustment is performed on the electric device, in a case that the real-time response power amount of the adjustable device reaches the upper limit value or the lower limit value of the preset adjustment threshold value, the demand response adjustment on the adjustable device is stopped, thereby avoiding an operation failure or damage due to excessive adjustment when the electric device is adjusted. Taking a household electric oven as an example, the rated power of a household electric heater is 1000-3000W, the upper limit value of the preset adjustment threshold value of the household electric heater is set as 2900W and the lower limit value is set as 1100W according to the rate power range thereof, and then the adjustment interval of the household electric heater is [1100W, 2900WJ. When it is necessary to perform demand response adjustment on the electric heater, in a case that the real-time response power amount of the electric heater reaches 1100W or 2900W, the demand response adjustment on the electric heater is stopped, thereby avoiding a situation in which the electric heater is damaged or cannot operate due to excessive adjustment.

After stopping performing demand response adjustment, the demand response device generates a demand response adjustment result according to the adjusted amount of the adjustable device, and sends the demand response adjustment result to the power supply end, so as to inform the power supply end of the adjustment condition of the adjustable device at this time.

In some embodiments, performing demand response adjustment on the electric device according to the preset response power amount and the type of the electric device further includes: receiving a second demand response adjustment instruction, which is fed back by the power supply end after performing demand response adjustment on all adjustable devices within the range of the power consumption unit; and in a case that the electric device is a non-adjustable device, in response to the second demand response adjustment instruction, performing demand response adjustment on the non-adjustable device according to an on-off state of the non-adjustable device.

The non-adjustable device is an electric device that uses fixed operating power for operating, and in a case that it is desired to adjust the operating power of the non-adjustable device, the operating power can only be adjusted via the on-off state of the electric device.

All adjustable electric devices in the power consumption unit refer to all adjustable electric devices included in the power consumption unit corresponding to the power supply end. For example, when the power consumption unit is a household, the adjustable electric devices are electric devices, such as a household air conditioner, an electric oven, an electric heater, and the like, in the household.

In some embodiments, the adjustable electric device has a corresponding rated power range, when the real-time response power of the adjustable electric device is adjusted to the preset adjustment threshold value (the upper limit value or the lower limit value) corresponding thereto, but the response power amount of the entire power consumption unit still cannot satisfy the demand of the power supply end, the power supply end generates the second demand response adjustment instruction according to the adjusted amounts in the demand response adjustment results returned by all the adjustable electric devices, and sends the second demand response adjustment instruction to each demand response device. If the electric device corresponding to the demand response device is a non-adjustable device, in response to the second demand response adjustment instruction, demand response adjustment is performed on the non-adjustable device according to the on-off state of the non-adjustable electric device.

In the embodiments, when it is determined that each adjustable electric device within the range of the power consumption unit has been adjusted to the preset adjustment threshold value, in a case that the response power amount of the entire power consumption unit corresponding to the power supply end still cannot satisfy the preset response power amount, at this time, the power supply end regenerates a demand response adjustment instruction, and the demand response device performs demand response adjustment on the non-adjustable electric device. Since the demand response adjustment can only be performed on the non-adjustable device via the on-off state thereof, the adjustable electric device is first adjusted by using the method in the present embodiment, and when the demand response adjustment cannot be performed on the adjustable electric device, the non-adjustable electric device is then adjusted. The non-adjustable device of the user is not preferentially powered off, so that the entire adjustment process is more reasonable and intelligent, and the user experience can be effectively improved.

In some embodiments, performing demand response adjustment on the non-adjustable device according to the on-off state of the non-adjustable device includes: when the demand response adjustment instruction is a reduction instruction and the non-adjustable electric device is in an on state, controlling the non-adjustable electric device to be turned off.

In some embodiments, when the demand response device corresponding to the non-adjustable electric device receives the demand response adjustment instruction, in a case that the demand response adjustment instruction is a reduction instruction and the non-adjustable electric device is in the on state, the non-adjustable electric device is controlled to be turned off, thereby achieving the effect of reducing the response power amount of the electric device.

In some embodiments, in response to the demand response adjustment instruction, performing demand response adjustment on the non-adjustable device according to the on-off state of the non-adjustable device, further includes: when the demand response adjustment instruction is an increase instruction and the non-adjustable electric device is in an off state, controlling the non-adjustable electric device to be turned on.

In some embodiments, when the demand response device corresponding to the non-adjustable electric device receives the demand response adjustment instruction, in a case that the demand response adjustment instruction is an increase instruction and the non-adjustable electric device is in the off state, the non-adjustable electric device is controlled to be turned on, thereby achieving the effect of increasing the response power of the electric device.

In some embodiments, the demand response device generates an electric device turn-on instruction or turn-off instruction, and sends the electric device turn-on instruction or turn-off instruction to a controller of the electric device, so as to control the electric device to be turned on or turned off.

In some embodiments, the demand response device is provided with a switch component, the switch component controls the on-off of a circuit from a power supply line to the electric device, and the demand response device directly controls the non-adjustable device to be turned on or turned off by means of the switch component.

In the above embodiments, after the adjustable electric device is adjusted, the demand response device satisfies the requirement of the power supply end for demand response adjustment by means of adjusting the on-off state of the non-adjustable device.

In some embodiments, the method for adjusting electric power demand response further includes:
sending the real-time adjustment response power amount of the electric device to the power supply end.

In some embodiments, the demand response device sends the real-time adjustment response power amount of the electric device to the power supply end in real time, so that the power supply end can learn about the real-time response power amount of the electric device within the range of the power consumption unit corresponding thereto.

The method further includes: receiving a response adjustment completion instruction generated by the power supply end when a total real-time adjustment response power amount reaches the preset response power amount, wherein the total real-time adjustment response power amount is generated according to the real-time adjustment response power amount of the electric device.

After receiving the real-time response power amount returned by each demand response device, the power supply end calculates, according to the real-time response power amount, the total real-time adjustment response power amount of the power consumption unit corresponding thereto, and monitors, according to the total real-time adjustment response power amount, the total demand response adjustment condition of the power consumption unit corresponding thereto. When the total real-time adjustment response power amount reaches the preset response power amount, it indicates that the total real-time adjustment response power amount of the power consumption unit has satisfied the adjustment requirement at this time. The power supply end generates the response adjustment completion instruction, and sends the response adjustment completion instruction to each demand response device, so as to notify each demand response device to stop the adjustment.

In some embodiments, the demand response device receives the response adjustment completion instruction returned by the power supply end.

The method further includes: stopping performing the demand response adjustment on the electric device according to the response adjustment completion instruction.

In some embodiments, the demand response device determines, according to the response adjustment completion instruction sent by the power supply end, that the demand response adjustment has been completed, and thus stops performing demand response adjustment on the electric device.

In the embodiments, the demand response device feeds back a response adjustment condition of the electric device to the power supply end in real time, and when it is determined that the total real-time adjustment response power amount of the power consumption unit of the power supply end reaches the preset response power amount, the power supply end generates the demand response adjustment completion instruction and sends the same to the demand response device. After receiving the instruction, the demand response device stops performing demand response adjustment on the electric device, so that the entire adjustment process is intelligent, accurate and rapid.

For example, during actual demand response adjustment, the preset response power amount is directly sent to the demand response device, so that the demand response device performs demand response adjustment on the electric device according to the preset response power amount.

For example, during actual demand response adjustment, an adjustment response power amount by which the electric device should be adjusted is directly sent to the demand response device, so that the demand response device performs demand response adjustment on the electric device according to the accurate response adjustment power amount.

In some embodiments, the first demand response adjustment instruction includes an adjustment response power amount of the electric device; and performing demand response adjustment on the electric device on the basis of the first demand response adjustment instruction includes: performing demand response adjustment on the electric device according to the adjustment response power amount.

The adjustment response power amount of the electric device is a response power amount that the electric device needs to reach in the present demand response adjustment. In some embodiments, it can be understood that the adjustment response power amount is calculated by the power supply end according to the preset response power amount, and the real-time response power amount and at least one performance parameter, which correspond to each electric device.

In some embodiments, the first demand response adjustment instruction returned by the power supply end includes the adjustment response power amount of the electric device, and upon receiving the first demand response adjustment instruction, the demand response device directly performs accurate demand response adjustment on the electric device according to the adjustment response power amount of the electric device in the first demand response adjustment instruction.

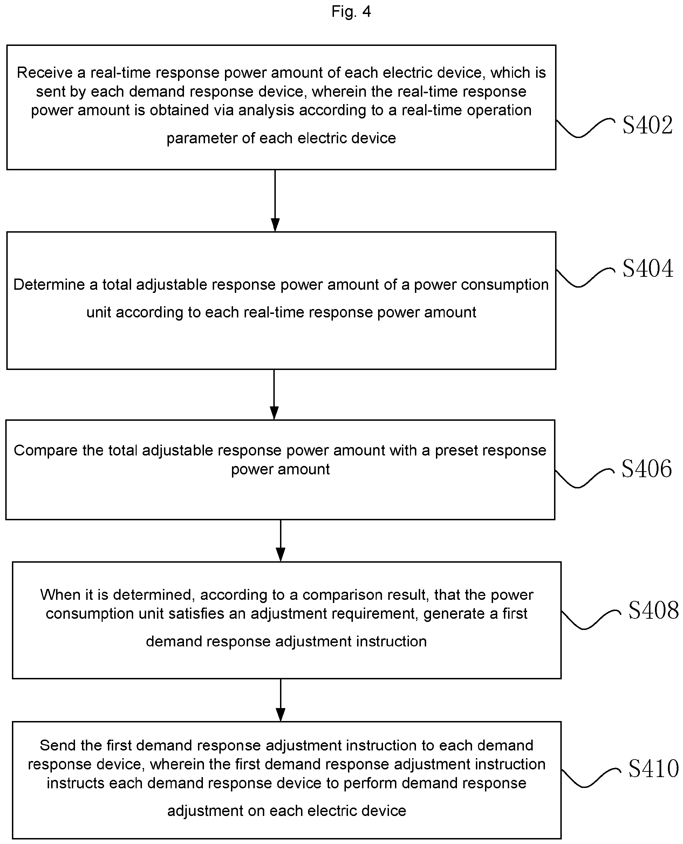

In some embodiments, as shown in Fig. 4, provided is a method for adjusting electric power demand response, which is applied to a power supply end, and includes the following steps:
Step 402: receiving a real-time response power amount of each electric device, which is sent by each demand response device, wherein the real-time response power amount is obtained via analysis according to a real-time operation parameter of each electric device.

In some embodiments, the power supply end receives the real-time response power amounts of the electric devices, which are sent by all demand response devices within the range of a power consumption unit corresponding to the power supply end, wherein the real-time response power amount is obtained via analysis according to the real-time operation parameter of the electric device.

Step 404: determining a total adjustable response power amount of the power consumption unit according to each real-time response power amount.

The power supply end stores the performance parameter of each electric device included in each power consumption unit corresponding to the power supply end, and the power supply end can calculate each adjustable response power amount of each electric device according to the performance parameter of each electric device and the current real-time response power amount of each electric device. The total adjustable response power amount by which the power consumption unit corresponding to the power supply end can be adjusted currently can be calculated according to each adjustable response power amount of each electric device. For example, it can be understood that the power supply end adds the adjustable response power amounts to obtain the total adjustable response power amount by which the power consumption unit corresponding to the power supply end can be adjusted.

In some embodiments, the power supply end determines, according to the real-time response power amount of each electric device, a total adjustable response power amount that the power consumption unit corresponding to the power supply end can reach currently.

Step 406: comparing the total adjustable response power amount with a preset response power amount.

The preset response power amount refers to a response power amount value that the power consumption unit corresponding to the power supply end needs to reach within a preset time period. It can be understood that the preset response power amount is set and issued by a power supply center according to a historical response power amount of the power consumption unit corresponding to the power supply end.

In some embodiments, after calculating the total adjustable response power amount of the power consumption unit, the power supply end needs to compare the total adjustable response power amount with the preset response power amount, so as to determine whether the power consumption unit satisfies an adjustment requirement. It can be understood that, in a case that the power consumption unit does not satisfy the adjustment requirement, the power supply end feeds back an adjustment failure instruction to the power supply center.

Step 408: when it is determined, according to a comparison result, that the power consumption unit satisfies the adjustment requirement, generating a first demand response adjustment instruction.

In some embodiments, when it is determined, according to the comparison result between the total adjustable response power amount and the preset response power amount, that the power consumption unit satisfies the adjustment requirement, the power supply end generates the first demand response adjustment instruction.

Step 410: sending the first demand response adjustment instruction to each demand response device, wherein the first demand response adjustment instruction instructs each demand response device to perform demand response adjustment on each electric device.

In some embodiments, the power supply end sends the first demand response adjustment instruction to each demand response device within the range of the power consumption unit corresponding to the power supply end, and the first demand response adjustment instruction instructs each demand response device to perform demand response adjustment on each electric device.

In the embodiments, the power supply end firstly determines the total adjustable response power amount of the power consumption unit according to the real-time response power amount of each electric device, then compares the total adjustable response power amount with the preset response power amount to determine whether the power consumption unit satisfies the adjustment requirement, and when the power consumption unit satisfies the adjustment requirement, generates and sends the first demand response adjustment instruction to each demand response device, so as to instruct each demand response device to perform demand response adjustment on each electric device. Since the total adjustable response power amount of the power consumption unit is determined according to the real-time response power amount of the electric device, when demand response adjustment is performed on the electric device, the demand response adjustment is performed on the electric device according to the actual conditions of the electric device, so that the entire demand response adjustment process is more accurate and rapid.

In some embodiments, comparing the total adjustable response power amount with the preset response power amount includes: in a case that the total adjustable response power amount is greater than the preset response power amount, determining that the electric device satisfies the adjustment requirement.

In some embodiments, in a case that the total adjustable response power amount is greater than the preset response power amount, it indicates that the preset response power amount can be achieved by performing demand response adjustment on the electric device in the power consumption unit at this time, and thus it is determined that the power consumption unit satisfies the adjustment requirement; and in a case that the total adjustable response power amount is less than the preset response power amount, it indicates that even in a case that all the electric devices in the power consumption unit are adjusted to maximum adjustable values corresponding thereto, the preset response power amount required by the power supply end cannot be satisfied, at this time, it is determined that the power consumption unit does not satisfy the adjustment requirement, and the power supply end feeds back the adjustment failure instruction to the power supply center. In the present embodiment, the total adjustable response power amount is compared with the preset response power amount, and by means of comparing the total adjustable response power amount with the preset response power amount, in some embodiments, it is determined prior to adjustment that whether the power consumption unit satisfies the adjustment requirement, thereby avoiding the situation in which the adjustment requirement cannot be satisfied even in a case that the demand response adjustment is performed on the power consumption unit.

In some embodiments, the method for adjusting electric power demand response further includes: receiving demand response adjustment results returned by demand response devices corresponding to all adjustable devices within the range of the power consumption unit; and generating a second demand response adjustment instruction according to the demand response adjustment results and the preset response power amount, and sending the second demand response adjustment instruction to each demand response device.

Each demand response adjustment result is generated by the demand response device corresponding to the adjustable device according to the adjusted amount of the adjustable device, after the adjustable device has reached the preset adjustment threshold value and stops the adjustment.

In some embodiments, the power supply end receives the demand response adjustment results returned by the demand response devices corresponding to all the adjustable devices within the range of the power consumption unit, obtains a total adjusted amount of the current power consumption unit according to the adjusted amounts of the adjustable devices in the demand response adjustment results after the adjustment of all the adjustable devices is ended, generates the second demand response adjustment instruction according to a difference value between the total adjusted amount and the preset response power amount, and sends the second demand response adjustment instruction to the demand response devices. It can be understood that the second demand response adjustment instruction instructs the demand response device corresponding to the non-adjustable device in the power consumption unit to perform demand response adjustment on the non-adjustable device.

In the embodiments, after receiving the demand response adjustment result returned by the demand response device after the adjustment of the adjustable device is completed, the power supply end generates the second demand response adjustment instruction according to the demand response adjustment result and the preset response power amount, and sends the second demand response adjustment instruction to each demand response device, so as to instruct each demand response device to perform demand response adjustment on the non-adjustable device. Since the demand response adjustment can only be performed on the non-adjustable device via the on-off state thereof, the adjustable electric device is first adjusted by using the method in the present embodiment, and when the demand response adjustment cannot be performed on the adjustable electric device, the non-adjustable electric device is then adjusted. The non-adjustable device of the user is not preferentially powered off, so that the entire adjustment process is more reasonable and intelligent, and the user experience can be effectively improved.

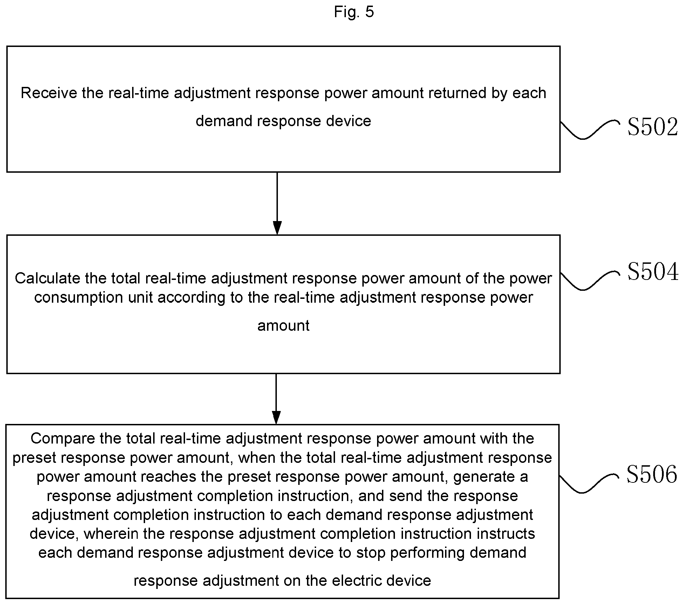

In some embodiments, as shown in Fig. 5, a method for adjusting electric power demand response further includes the following steps:
step 502: receiving the real-time adjustment response power amount returned by each demand response device.

In some embodiments, the power supply end monitors, in real time, the real-time response power amount of the electric device corresponding to each demand response device by means of receiving the real-time adjustment response power amount returned by each demand response device.

Step 504: calculating the total real-time adjustment response power amount of the power consumption unit according to the real-time adjustment response power amount.

In some embodiments, after receiving the real-time response power amount returned by each demand response device, the power supply end calculates, according to the real-time response power amount, the total real-time adjustment response power amount of the power consumption unit corresponding to the power supply end, and monitors, according to the total real-time adjustment response power amount, the total demand response adjustment condition of the power consumption unit corresponding to the power supply end.

Step 506: comparing the total real-time adjustment response power amount with the preset response power amount, when the total real-time adjustment response power amount reaches the preset response power amount, generating a response adjustment completion instruction, and sending the response adjustment completion instruction to each demand response adjustment device, wherein the response adjustment completion instruction instructs each demand response adjustment device to stop performing demand response adjustment on the electric device.

In some embodiments, when the power supply end monitors that the total real-time adjustment response power amount of the power consumption unit reaches the preset response power amount, it indicates that the total real-time adjustment response power amount of the power consumption unit has satisfied the adjustment requirement at this time, the power supply end immediately generates the response adjustment completion instruction, and sends the response adjustment completion instruction to each demand response adjustment device, wherein the response adjustment completion instruction instructs each demand response adjustment device to stop performing demand response adjustment on the electric device.

In the embodiments, the power supply end receives the response adjustment condition of the electric device, which is fed back by the demand response device in real time, when it is determined that the total real-time adjustment response power amount of the power consumption unit reaches the preset response power amount, the power supply end generates the demand response adjustment completion instruction and sends the same to the demand response device, and after receiving the instruction, the demand response device stops performing demand response adjustment on the electric device. The entire adjustment process is intelligent, accurate and rapid.

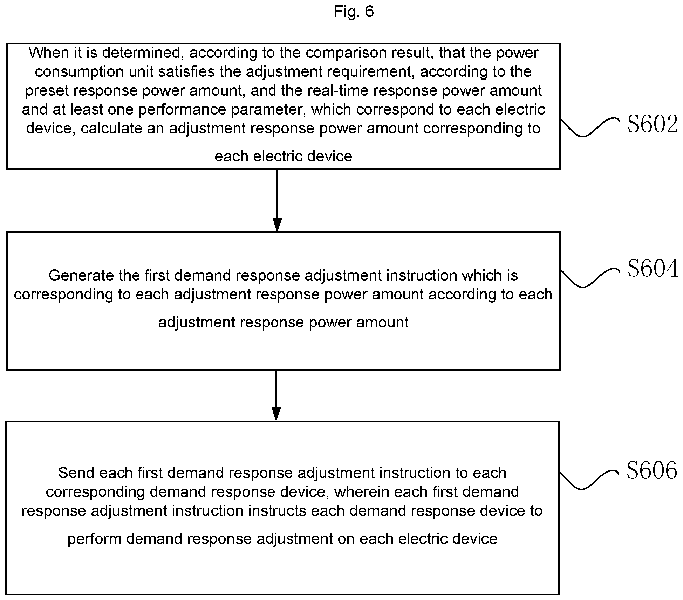

In some embodiments, as shown in Fig. 6, the first demand response adjustment instruction includes an adjustment response power amount of the electric device; and when it is determined, according to the comparison result, that the power consumption unit satisfies the adjustment requirement, generating the first demand response adjustment instruction, includes the following steps:
Step 602: when it is determined, according to the comparison result, that the power consumption unit satisfies the adjustment requirement, according to the preset response power amount, and the real-time response power amount and at least one performance parameter, which correspond to each electric device, calculating the adjustment response power amount corresponding to each electric device.

The performance parameter of the electric device includes a rated operation power value of the electric device.

In some embodiments, according to the preset response power amount, the real-time response power amount corresponding to each electric device, and the performance parameter of each electric device, the adjustment response power amount by which each electric device needs to be adjusted in the present demand response adjustment is calculated. The preset response power amount is allocated to each electric device, and meanwhile it is ensured that each electric device does not send a fault due to exceeding the rated operation power value when performing adjustment according to the adjustment response power amount.

Step 604: generating the first demand response adjustment instruction which is corresponding to each adjustment response power amount according to each adjustment response power amount.

In some embodiments, the power supply end writes each adjustment response power amount into the first demand response adjustment instruction.

Step 606: sending each first demand response adjustment instruction to each corresponding demand response device, wherein each first demand response adjustment instruction instructs each demand response device to perform demand response adjustment on each electric device.

In some embodiments, the power supply end sends each first demand response adjustment instruction to each corresponding demand response device, each demand response device performs demand response adjustment on each electric device according to the first demand response adjustment instruction corresponding thereto, so as to adjust the real-time operation response power amount of each electric device to the corresponding adjustment response power amount.

In the embodiments, the adjustment response power amount of each electric device is calculated according to the preset response power amount, the real-time response power amount corresponding to each electric device, and the performance parameter of each electric device, and the adjustment response power amount is directly written into the first demand response adjustment instruction, so as to instruct the demand response device to adjust the real-time operation power amount of the electric device to the corresponding adjustment response power amount. Since the performance parameter of each electric device is taken into consideration when each electric device is calculated, during adjustment, it can be ensured that each electric device does not send a fault due to exceeding the rated operation power value when performing adjustment according to the adjustment response power amount.

In some embodiments, provided is a method for adjusting electric power demand response, which is applied to a demand response device, wherein the demand response device is disposed between a wiring terminal of an electric device and a power supply line wiring, and the demand response device is internally provided with a controller, a communication component, an interface component and a switch component.

The demand response device respectively communicates with the electric device and an electric meter via the internal communication component.

First, the demand response device feeds back, to the electric meter in real time, a real-time response power amount of the electric device corresponding to the demand response device. In some embodiments, the demand response device acquires a real-time operation parameter of the electric device, and analyzes the real-time operation parameter to obtain the real-time response power amount of the electric device, and sends the real-time response power amount of the electric device to the electric meter.

In a case that receives a preset response power amount sent by a power supply center, the electric meter determines a total adjustable response power amount of a power consumption unit according to the real-time response power amount of each electric device, compares the total adjustable response power amount with the preset response power amount, and in a case that the total adjustable response power amount is less than the preset response power amount, it is determined that the power consumption unit does not satisfy an adjustment requirement, then the electric meter generates and returns an adjustment failure instruction to the power supply center; and in a case that the total adjustable response power amount is greater than the preset response power amount, it is determined that the power consumption unit satisfies the adjustment requirement, then the electric meter writes the preset response power amount into a first demand response adjustment instruction, and issues the first demand response adjustment instruction to each demand response device of the power consumption unit.

After receiving the first demand response adjustment instruction, the demand response device firstly determines the type of the electric device corresponding thereto, and in a case that the electric device is a non-adjustable device, the demand response device temporarily performs no adjustment. If the electric device is an adjustable device, the demand response device performs demand response adjustment on the electric device according to the preset response power amount, and the demand response device always returns the real-time response power amount of the electric device to the electric meter in real time during the adjustment process.

The electric meter calculates a total real-time adjustment response power amount of the power consumption unit according to the real-time response power amount returned by each demand response device, and continuously compares the total real-time adjustment response power amount with the preset response power amount, and once the total real-time adjustment response power amount reaches the preset response power amount, the electric meter generates a response adjustment completion instruction, and sends the response adjustment completion instruction to the demand response device. The demand response device stops performing demand response adjustment on the electric device in response to the instruction.

When the demand response device adjusts the real-time response power amount of the adjustable electric device to a preset adjustment threshold value, the demand response device stops performing demand response adjustment on the adjustable electric device, generates a demand response adjustment result on the basis of an adjustment amount that the adjustable electric device has been completed, and returns the demand response adjustment result to the electric meter.

After all adjustable electric devices are adjusted to the preset adjustment threshold value, in a case that the total real-time adjustment response power amount of the power consumption unit still does not reach the preset response power amount, the electric meter generates a second demand response adjustment instruction according to the adjustment amounts that all the adjustable electric devices have been completed and the preset response power amount, and sends the second demand response adjustment instruction to each demand response device. At this time, the demand response device corresponding to the non-adjustable electric device responds to the second demand response adjustment instruction, and adjusts the real-time response power amount of the non-adjustable device by controlling the on-off state of the electric device.

Similarly, during the process of performing demand response adjustment on the non-adjustable electric device, once the total real-time adjustment response power amount of the power consumption unit reaches the preset response power amount, the electric meter generates the response adjustment completion instruction, and sends the response adjustment completion instruction to the demand response device, and the demand response device stops performing demand response adjustment on the electric device in response to the instruction.

It should be understood that, although the steps in the flowcharts involved in the above embodiments are sequentially displayed according to the indication of arrows, these steps are not necessarily executed in sequence according to the order indicated by the arrows. Unless explicitly stated herein, the execution of these steps is not strictly limited, and these steps can be executed in other orders. Moreover, at least part of the steps in the flowcharts involved in the above embodiments can include a plurality of steps or a plurality of stages, and these steps or stages are not necessarily executed at the same moment, but can be executed at different moments, and the execution order of these steps or stages is not necessarily executed in sequence, but can be executed in turn or alternately with other steps or at least part of steps or stages in the other steps.

Based on the same inventive concept, some embodiments of the present disclosure further provides an apparatus for adjusting electric power demand response for implementing the method for adjusting electric power demand response involved above. Implementation solutions for solving problems provided by the apparatus are similar to implementation solutions described in the above method, thus for specific definitions in the embodiments of one or more apparatus for adjusting electric power demand response provided below, reference can be made to the definitions of the method for adjusting electric power demand response mentioned above, and details are not described herein again.

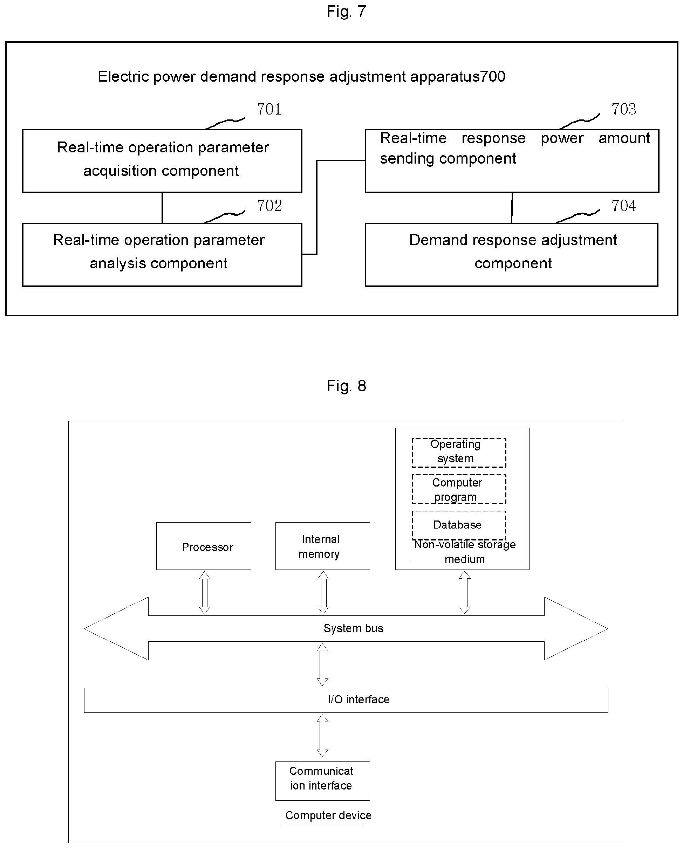

In some embodiments, as shown in Fig. 7, provided is an apparatus for adjusting electric power demand response 700, the apparatus for adjusting electric power demand response 700 includes: a real-time operation parameter acquisition component 701, a real-time operation parameter analysis component 702, a real-time response power amount sending component 703 and a demand response adjustment component 704, and:
the real-time operation parameter acquisition component 701 is configured to acquire a real-time operation parameter of an electric device.

The real-time operation parameter analysis component 702 is configured to analyze the real-time operation parameter to obtain a real-time response power amount of the electric device.

The real-time response power amount sending component 703 is configured to send the real-time response power amount to a power supply end, and receive a first demand response adjustment instruction, which is returned by the power supply end when determining that an adjustment demand is satisfied by comparing a total adjustable response power amount of a power consumption unit with a preset response power amount, wherein the total adjustable response power amount of the power consumption unit is determined according to the real-time response power amount.

The demand response adjustment component 704 is configured to perform demand response adjustment on the electric device on the basis of the first demand response adjustment instruction.

When it is necessary to perform demand response adjustment on the electric device, the demand response device performs analysis according to the real-time operation parameter of the electric device to obtain the real-time response power amount of the electric device, so that the actual operation condition of the electric device can be reflected; the power supply end performs comparison on the basis of the total adjustable response power amount of the power consumption unit and the preset response power amount, and returns the first demand response adjustment instruction when it is determined that the comparison result satisfies the adjustment requirement; and the demand response device performs demand response adjustment on the electric device on the basis of the first demand response adjustment instruction. Since the total adjustable response power amount of the power consumption unit is determined according to the real-time response power amount of the electric device, when demand response adjustment is performed on the electric device, the demand response adjustment is performed on the electric device according to the actual conditions of the electric device, so that the entire demand response adjustment process is more accurate and rapid.

In some embodiments, the demand response adjustment component is further configured to: perform demand response adjustment on the electric device according to the preset response power amount and the type of the electric device.

In some embodiments, the demand response adjustment component is further configured to: in a case that the electric device is an adjustable device, perform demand response adjustment on the electric device according to the preset response power amount.

In some embodiments, the apparatus for adjusting electric power demand response further includes: a demand response adjustment result sending component, configured to: in a case that the real-time response power amount of the adjustable device reaches a preset adjustment threshold value, stop performing demand response adjustment on the electric device; generate a demand response adjustment result according to an adjusted amount of the adjustable device; and send the demand response adjustment result to the power supply end.

In some embodiments, the demand response adjustment component is further configured to: receive a second demand response adjustment instruction, which is fed back by the power supply end after performing demand response adjustment on all adjustable devices within the range of the power consumption unit; and in a case that the electric device is a non-adjustable device, in response to the second demand response adjustment instruction, perform demand response adjustment on the non-adjustable device according to an on-off state of the non-adjustable device.

In some embodiments, the apparatus for adjusting electric power demand response further includes: a demand response adjustment stop component, configured to send the real-time adjustment response power amount of the electric device to the power supply end; receive a response adjustment completion instruction generated by the power supply end when a total real-time adjustment response power amount reaches the preset response power amount, wherein the total real-time adjustment response power amount is generated according to the real-time adjustment response power amount of the electric device; and stop performing demand response adjustment on the electric device according to the response adjustment completion instruction.

In some embodiments, the demand response adjustment component is further configured to: perform demand response adjustment on the electric device according to an adjustment response power amount.

All or some of the components in the apparatus for adjusting electric power demand response can be implemented by software, hardware and a combination thereof. In some embodiments, the foregoing components is embedded into or independent of a processor in a computer device in the form of hardware, in some embodiments, the foregoing components are stored in a memory in the computer device in the form of software, so that the processor can conveniently invoke and execute operations corresponding to foregoing components.

In some embodiments, provided is a computer device, wherein the computer device is a server, and an internal structure diagram thereof is shown in Fig. 8. The computer device includes a processor, a memory and a network interface, which are connected by using a system bus. The processor of the computer device is configured to provide computing and control capabilities. The memory of the computer device includes a non-volatile storage medium and an internal memory. The non-volatile storage medium stores an operating system, a computer program and a database. The internal memory provides an environment for the operation of the operating system and the computer program in the non-volatile storage medium. The database of the computer device is configured to store data such as a preset response power amount, a response power adjustment range, or the like. The network interface of the computer device is configured to communicate with an external terminal via a network. The computer program implements, when executed by the processor, a method for adjusting electric power demand response.

Those skilled in the art can understand that the structure shown in Fig. 8 is merely a block diagram of a partial structure related to the solutions of the present disclosure, and does not constitute a limitation on the computer device to which the solutions of the present disclosure are applied, in some embodiments, the specific computer device includes more or fewer components than those shown in the figure, or combine some components, or have different component arrangements.

In some embodiments, provided is a computer device, including a memory and a processor, wherein a computer program is stored in the memory, and the processor implements, when executing the computer program, the steps in the method for adjusting electric power demand response in various embodiments mentioned above.

In some embodiments, provided is a non-volatile computer-readable storage medium, storing a computer program thereon, wherein the computer program implements, when executed by a processor, the steps of the method for adjusting electric power demand response in various embodiments mentioned above.

In some embodiments, provided is a computer program product, including a computer program, wherein the computer program implements, when executed by a processor, the steps of the method for adjusting electric power demand response in various embodiments mentioned above.

In some embodiments, provided is a computer program, including an instruction, wherein the instruction causes, when executed by a processor, the processor to execute the steps of the method for adjusting electric power demand response in various embodiments mentioned above.

It should be noted that user information (including, but not limited to, user equipment information, user personal information, and the like) and data (including, but not limited to, data used for analysis, stored data, displayed data, and the like) involved in the present disclosure are information and data, which are authorized by the user or fully authorized by all parties.

Those ordinary skilled in the art can understand that all or some processes of the method in the above embodiments can be implemented by instructing related hardware by using a computer program, the computer program can be stored in a non-volatile computer-readable storage medium, and when the computer program is executed, the processes of the embodiments of the above methods can be included. Any reference to a memory, a database or another medium used in the embodiments provided in the present disclosure can include at least one of a non-volatile memory and a volatile memory. The non-volatile memory can include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory can include a random access memory (RAM) or an external cache memory. By way of illustration and not limitation, the RAM can be in a variety of forms, for example, a static random access memory (SRAM) or a dynamic random access memory (DRAM). The database involved in the embodiments provided in the present disclosure can include at least one of a relational database and a non-relational database. The non-relational database can include a blockchain-based distributed database, and the like, which is not limited thereto. The processor involved in the embodiments provided in the present disclosure can be a general-purpose processor, a central processor, a graphics processor, a digital signal processor, a programmable logic device, a data processing logic device based on quantum computing, and the like, which is not limited thereto.

Various technical features of the above embodiments can be combined in any manner, for the brevity of description, not all possible combinations of the technical features in the above embodiments are described, however, as long as there is no contradiction in the combinations of these technical features, these combinations should be considered to fall within the scope recorded in the present specification.

The above embodiments only express several implementations of the present disclosure, and the description thereof is more specific and detailed, but it cannot be understood as a limitation to the patent scope of the present disclosure. It should be noted that, for those ordinary skilled in the art, several variations and improvements can be made without departing from the concept of the present disclosure, all these variations and improvements fall within the protection scope of the present disclosure. Therefore, the protection scope of the present disclosure shall be subject to the appended claims.

## Claims

1. A method for adjusting electric power demand response, applied to a demand response device, wherein the demand response device is disposed between a wiring terminal of an electric device and a power supply line wiring, and the method for adjusting electric power demand response comprises:
acquiring a real-time operation parameter of the electric device;
analyzing the real-time operation parameter to obtain a real-time response power amount of the electric device;
sending the real-time response power amount to a power supply end;
receiving a first demand response adjustment instruction, which is returned by the power supply end when determining that an adjustment demand is satisfied by comparing a total adjustable response power amount of a power consumption unit with a preset response power amount, wherein the total adjustable response power amount of the power consumption unit is determined according to the real-time response power amount; and
performing demand response adjustment on the electric device on the basis of the first demand response adjustment instruction.

2. The method for adjusting electric power demand response according to claim 1, wherein the first demand response adjustment instruction comprises the preset response power amount; and performing the demand response adjustment on the electric device on the basis of the first demand response adjustment instruction comprises:
performing the demand response adjustment on the electric device according to the preset response power amount and a type of the electric device.

3. The method for adjusting electric power demand response according to claim 2, wherein performing the demand response adjustment on the electric device according to the preset response power amount and the type of the electric device comprises:
in a case that the electric device is an adjustable device, performing the demand response adjustment on the electric device according to the preset response power amount.

4. The method for adjusting electric power demand response according to claim 3, further comprising:
in a case that a real-time response power amount of the adjustable device reaches a preset adjustment threshold value, stopping performing the demand response adjustment on the electric device;
generating a demand response adjustment result according to an adjusted amount of the adjustable device; and
sending the demand response adjustment result to the power supply end.

5. The method for adjusting electric power demand response according to claim 2, wherein performing the demand response adjustment on the electric device according to the preset response power amount and the type of the electric device comprises:
receiving a second demand response adjustment instruction, which is fed back by the power supply end after performing the demand response adjustment on all adjustable devices within a range of the power consumption unit; and
in a case that the electric device is a non-adjustable device, in response to the second demand response adjustment instruction, performing demand response adjustment on the non-adjustable device according to an on-off state of the non-adjustable device.

6. The method for adjusting electric power demand response according to any one of claims 1-5, further comprising:
sending a real-time adjustment response power amount of the electric device to the power supply end;
receiving a response adjustment completion instruction generated by the power supply end when a total real-time adjustment response power amount reaches the preset response power amount, wherein the total real-time adjustment response power amount is generated according to the real-time adjustment response power amount of the electric device; and
stopping performing the demand response adjustment on the electric device according to the response adjustment completion instruction.

7. The method for adjusting electric power demand response according to claim 1, wherein the first demand response adjustment instruction comprises an adjustment response power amount of the electric device; and
performing the demand response adjustment on the electric device on the basis of the first demand response adjustment instruction comprises:
performing the demand response adjustment on the electric device according to the adjustment response power amount.

8. A method for adjusting electric power demand response, applied to a power supply end, wherein the method for adjusting electric power demand response comprises:
receiving a real-time response power amount of each electric device, which is sent by each demand response device, wherein the real-time response power amount is obtained via analysis according to a real-time operation parameter of each electric device; and
determining a total adjustable response power amount of a power consumption unit according to each real-time response power amount;
comparing the total adjustable response power amount with a preset response power amount;
when it is determined, according to a comparison result, that the power consumption unit satisfies an adjustment requirement, generating a first demand response adjustment instruction; and
sending the first demand response adjustment instruction to each demand response device, wherein the first demand response adjustment instruction instructs each demand response device to perform demand response adjustment on each electric device.

9. The method for adjusting electric power demand response according to claim 8, wherein comparing the total adjustable response power amount with the preset response power amount comprises:
in a case that the total adjustable response power amount is greater than the preset response power amount, determining that the electric device satisfies the adjustment requirement.

10. The method for adjusting electric power demand response according to claim 8, further comprising:
receiving demand response adjustment results returned by demand response devices corresponding to all adjustable devices within range of the power consumption unit; and
generating a second demand response adjustment instruction according to the demand response adjustment results and the preset response power amount, and
sending the second demand response adjustment instruction to each demand response device.

11. The method for adjusting electric power demand response according to any one of claims 8-10, further comprising:
receiving a real-time adjustment response power amount returned by each demand response device;
calculating a total real-time adjustment response power amount of the power consumption unit according to the real-time adjustment response power amount;
comparing the total real-time adjustment response power amount with the preset response power amount;
when the total real-time adjustment response power amount reaches the preset response power amount, generating a response adjustment completion instruction; and
sending the response adjustment completion instruction to each demand response adjustment device, wherein the response adjustment completion instruction instructs each demand response adjustment device to stop performing the demand response adjustment on the electric device.

12. The method for adjusting electric power demand response according to claim 8, wherein the first demand response adjustment instruction comprises an adjustment response power amount of the electric device; and
when it is determined, according to the comparison result, that the power consumption unit satisfies the adjustment requirement, generating the first demand response adjustment instruction, comprises:
when it is determined, according to the comparison result, that the power consumption unit satisfies the adjustment requirement, according to the preset response power amount, and the real-time response power amount and at least one performance parameter, which correspond to each electric device, calculating the adjustment response power amount corresponding to each electric device;
generating the first demand response adjustment instruction which is corresponding to each adjustment response power amount according to each adjustment response power amount; and
sending each first demand response adjustment instruction to each corresponding demand response device, wherein each first demand response adjustment instruction instructs each demand response device to perform demand response adjustment on each electric device.

13. An apparatus for adjusting electric power demand response, comprising:
a real-time operation parameter acquisition component, configured to acquire a real-time operation parameter of an electric device;
a real-time operation parameter analysis component, configured to analyze the real-time operation parameter to obtain a real-time response power amount of the electric device;
a real-time response power amount sending component, configured to send the real-time response power amount to a power supply end, and receive a first demand response adjustment instruction, which is returned by the power supply end when determining that an adjustment demand is satisfied by comparing a total adjustable response power amount of a power consumption unit with a preset response power amount, wherein the total adjustable response power amount of the power consumption unit is determined according to the real-time response power amount; and
a demand response adjustment component, configured to perform demand response adjustment on the electric device on the basis of the first demand response adjustment instruction.

14. A computer device, comprising a memory and a processor, wherein the memory stores a computer program, and the processor implements, when executing the computer program, the steps of the method for adjusting electric power demand response according to any one of claims 1-12.

15. A non-volatile computer-readable storage medium, storing a computer program thereon, wherein the computer program implements, when executed by a processor, the steps of the method for adjusting electric power demand response according to any one of claims 1-12.

16. A computer program product, comprising a computer program, wherein the computer program implements, when executed by a processor, the steps of the method for adjusting electric power demand response according to any one of claims 1-12.

17. A computer program, comprising:
an instruction, wherein the instruction causes, when executed by a processor, the processor to execute the steps of the method for adjusting electric power demand response according to any one of claims 1-12.
